Europäisches Patentamt

European Patent Office

Office européen des brevets

(19)

(11) Numéro de publication : **0 307 281 B1**

(12) **FASCICULE DE BREVET EUROPEEN**

(45) Date de publication du fascicule du brevet :
29.01.92 Bulletin 92/05

(51) Int. Cl.$^5$ : **H04N 5/073, H04N 5/278**

(21) Numéro de dépôt : **88402184.1**

(22) Date de dépôt : **30.08.88**

(54) **Circuit générateur de synchronisation point d'une image de télévision, et son utilisation pour l'incrustation de symbologie.**

(30) Priorité : **01.09.87 FR 8712158**

(43) Date de publication de la demande :
**15.03.89 Bulletin 89/11**

(45) Mention de la délivrance du brevet :
**29.01.92 Bulletin 92/05**

(84) Etats contractants désignés :
**DE GB**

(56) Documents cités :
**EP-A- 0 005 672**
**FR-A- 2 524 746**

(73) Titulaire : **THOMSON-CSF**
**51, Esplanade du Général de Gaulle**
**F-92800 Puteaux (FR)**

(72) Inventeur : **Gillet, Claude**
**Thomson-CSF SCPI 19, avenue de Messine**
**F-75008 Paris (FR)**
Inventeur : **Voisin, Gérard**
**Thomson-CSF SCPI 19, avenue de Messine**
**F-75008 Paris (FR)**
Inventeur : **Maitre, Xavier**
**Thomson-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

## Description

La présente invention concerne un circuit générateur d'un signal de synchronisation point d'une image de télévision et une utilisation plus particulièrement envisagée pour ce circuit consistant à incruster une symbologie en vidéo synthétique dans l'image.

Les réseaux de télévision ont obligatoirement un centre de traitement et d'exploitation des sources vidéo. Pour faciliter l'exploitation et rendre la diffusion plus agréable, il est nécessaire d'utiliser des sources vidéo synchrones. Ce résultat est obtenu assez simplement dans le cas d'un studio constitué de caméras vidéos de même genre et d'une régie ; un générateur de synchronisation fournit un signal d'horloge principal à la cadence ligne et trame et pilote les différentes caméras ainsi que la régie.

Très rapidement, les sources vidéos se sont diversifiées ; sont apparus des magnétoscopes, des caméras portables indépendantes, des circuits incrustateurs de symboles et de caractères alphanumériques, des caméras en circuit solide à transfert de charges, etc..... Aussi, la synchronisation ligne à ligne ne suffit plus. La base de temps de certaines de ces sources vidéos, en particulier les caméras solides sont à des fréquences élevées correspondant à la fréquence point et pouvant atteindre jusqu'à 10 MHz. Pour ces configurations on utilise alors des bases de temps avec des oscillateurs à fréquence élevée et dont la fréquence est asservie au signal de synchronisation ligne choisi comme référence. L'oscillateur peut être constitué par un circuit classique à self et capacité dont on contrôle la fréquence par un discriminateur. La tension d'erreur du discriminateur est obtenue en comparant la fréquence du signal fourni à celle du signal externe de référence. C'est la technique dite des générateurs verrouillés. Voir par exemple la demande de brevet FR-A-2524746. En autonome, c'est-à-dire non asservis, ces générateurs sont imprécis et inexploitables.

Une amélioration est apparue en remplaçant ces oscillateurs par un oscillateur à quartz dont on déplace la fréquence par des circuits additionnels du genre capacité série ou parallèle, varicap, etc..... Ces oscillateurs sont plus précis mais sont limités en température. Ils ne peuvent satisfaire des normes sévères imposées notamment pour des équipements militaires, par exemple de − 40°C à + 125°C.

Pour fonctionner correctement, les générateurs précités à self et capacité ou à quartz, ont besoin d'un signal extérieur pour produire l'asservissement de fréquence ; le signal délivré par le générateur n'est pas pur il est affecté d'une certaine instabilité due au rattrapage constant de l'asservissement et au bruit dans la bande totale d'exploitation, la fréquence des oscillateurs n'est jamais suffisamment élevée pour éliminer le rattrapage de fréquence dû à l'asservissement ce qui se traduit par des décalages d'une ligne à l'autre sur l'image.

Dans le cas d'incrustation de symboles ou de caractères alphanumériques, les phénomènes précités produisent des distorsions par décalage horizontal de la symbologie.

Le but de l'invention est de remédier à ces inconvénients, en particulier aux limitations thermiques et aux difficultés d'incrustation de symbologie.

Selon l'invention, il est réalisé un circuit générateur de synchronisation point d'une image vidéo balayée ligne par ligne à une cadence de synchronisation ligne correspondant au standard de télévision utilisé, ledit circuit comprenant :

— une horloge à quartz, de fréquence correspondant à la fréquence point FP dudit standard ;

— un circuit de retard à N sorties pour retarder le signal d'horloge de 1 à N incréments de valeur 1/NFP d'une sortie à la suivante ;

— un circuit logique de décodage et de commande recevant les N signaux d'horloge décalés et le signal de synchronisation ligne, déterminant et codifiant le rang du premier signal d'horloge décalé qui suit le signal de synchronisation ligne ;

— et un circuit logique de sélection qui reçoit les N signaux d'horloge décalés et l'information de rang codé pour sélectionner le signal d'horloge décalé de rang correspondant lequel constitue le signal d'horloge asservi en phase au signal de synchronisation ligne.

Le générateur de base est ainsi une horloge à quartz, donc un générateur de très haute stabilité, avec une dérive en fréquence très lente et qui assure les corrections de phase temporelles tant que l'écart reste inférieur ou égal à l'incrément de retard.

Les particularités et avantages de l'invention apparaîtront dans la description qui suit donnée à titre d'exemple, à l'aide des figures annexées qui représentent :

— Fig. 1, un schéma simplifié d'un circuit générateur de synchronisation point conforme à l'invention ;

— Fig. 2, une forme d'onde relative au standard de télévision et au problème à résoudre ;

— Fig. 3, des formes d'onde relatives au fonctionnement du circuit selon la figure 1 ;

— Fig. 4, un exemple de réalisation d'un circuit générateur de synchronisation point selon l'invention ;

— Fig. 5, un bloc diagramme correspondant à une utilisation du circuit générateur de synchronisation point selon l'invention pour réaliser une incrustation de symbologie dans une image vidéo de télévision.

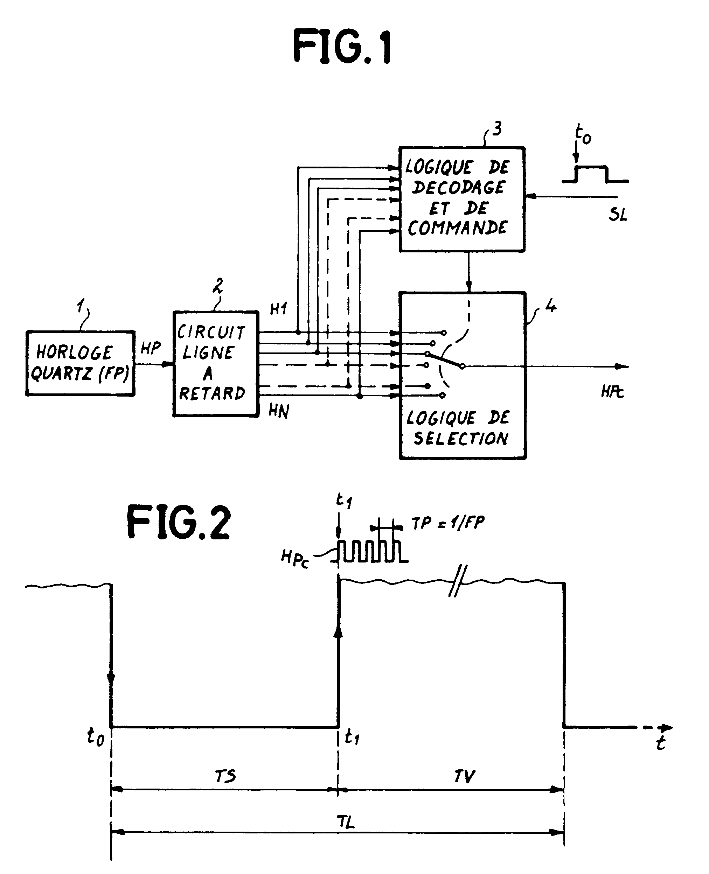

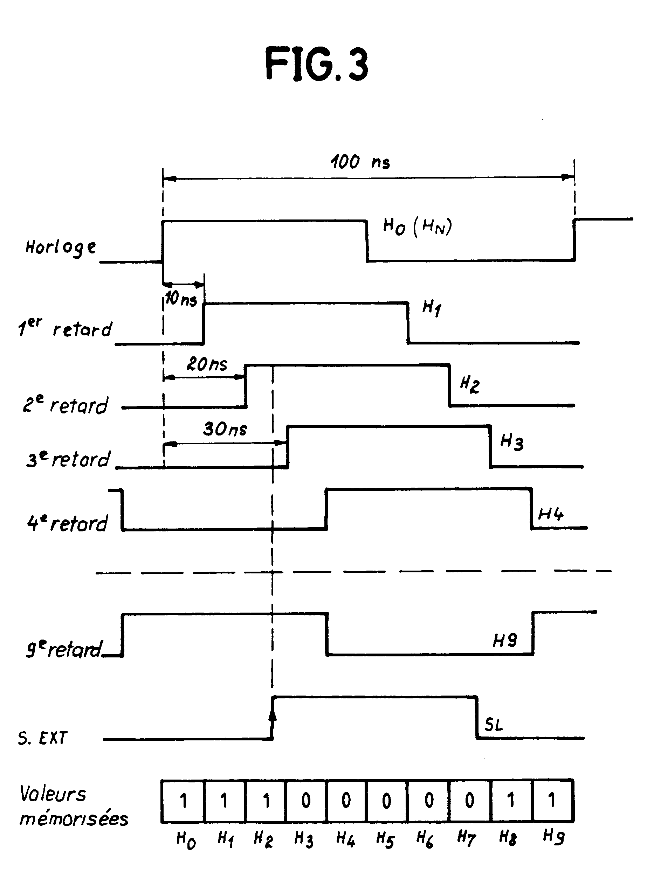

En référence à la figure 1, le circuit générateur de synchronisation point comporte une horloge à quartz 1 qui délivre un signal d'horloge HP de période TP correspondant à la période point du standard de télévision envisagé. Un circuit ligne à retard 2 produit un retard global égal à la période TP et comporte un nombre N de sorties pour produire N incréments successifs de retard de valeur TP/N. Ces signaux sont indiqués H1 à HN, le signal HN se retrouvant en phase avec le signal HP de la période suivante. Le décalage de ces signaux est représenté sur la figure 3. Les sorties décalées H1 à HN sont appliquées d'une part à une logique de décodage et de commande 3 et d'autre part, à une logique de sélection 4. La logique 3 reçoit par ailleurs le signal de synchronisation ligne SL d'un circuit générateur d'image de télévision annexe (Fig. 5).

En se reportant à la figure 2, l'instant t0 de référence correspond au front avant du signal de synchronisation ligne SL. Il prend effet à la fin d'une exploration ligne de l'image vidéo. L'instant t1 correspond à la fin de la durée de suppression ligne TS et au début de la durée vidéo TV de la ligne vidéo suivante, et ainsi de suite, à la période ligne TL. La période de suppression ligne TS est de 11 microsecondes par exemple. Au cours de cette durée TS le circuit générateur de synchronisation point a pour tâche de mettre en phase (avec une précision au moins égale à l'incrément TP/N) le signal HP d'horloge point avec le début du balayage vidéo de ligne à l'instant t1, comme représenté par le signal HPc qui est le signal d'horloge calé délivré en sortie du circuit logique de sélection 4. On considère, à titre d'exemple, que la fréquence point est de 10 MHz et la période TP est donc de 100 nanosecondes. La durée de suppression point TS est très grande devant la période point TP et que cette durée TS est largement suffisante pour produire l'asservissement de phase désiré compte tenu des retards apportés par les différents circuits 2 à 4 formant la chaîne d'asservissement.

La logique de décodage et de commande 3 détermine et codifie le rang du premier signal d'horloge décalé HJ (H3 dans le cas de la figure 3 en considérant la transition 1-0 du signal extérieur SL) qui suit l'instant de référence to considéré de l'impulsion de synchronisation SL. La logique de sélection 4 reçoit l'information de rang J codée et sélectionne la sortie HJ correspondante qui est indiquée selon la référence HPc signifiant horloge point calée.

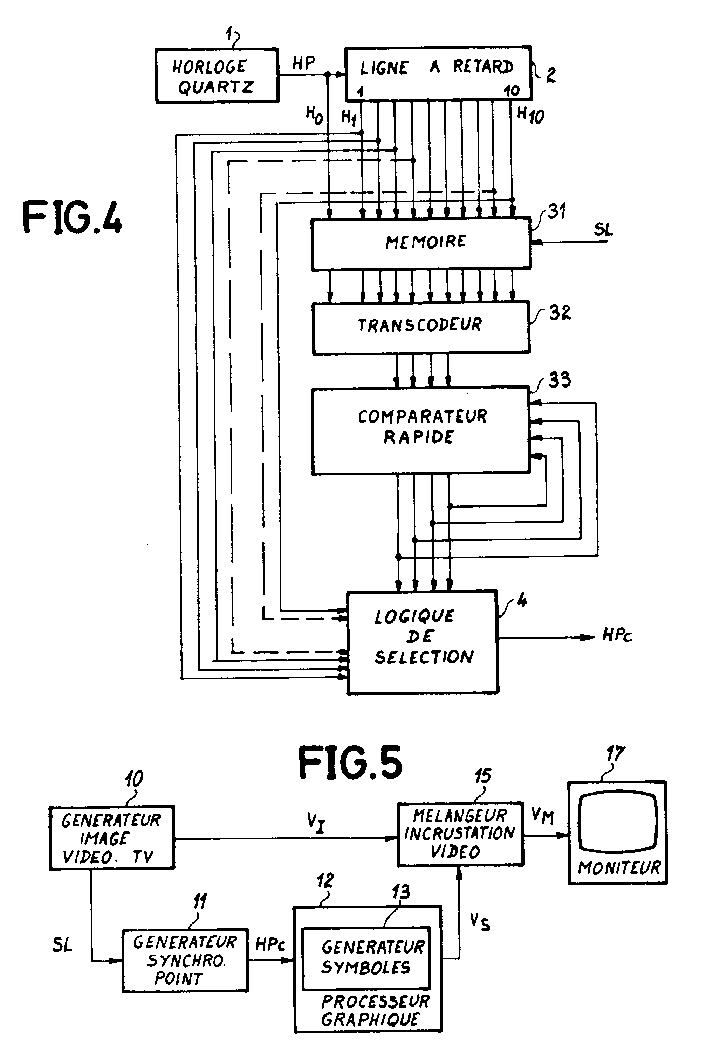

La figure 4 représente un mode de réalisation. On considère une horloge à quartz à 10 MHz. Cette horloge est appliquée à une ligne à retard 2 de retard total 100 ns, et comportant 10 sorties décalées de 10 en 10 ns H1 à H10. Le signal d'horloge HP constitue également une référence H0 qui se trouve dans ce cas en phase avec le signal H10. L'état des 10 sorties retardées H1 à H10 et celui du signal non retardé H0 sont mémorisées dans le circuit mémoire 31 à l'instant de référence to défini par un front de la synchronisation pilote extérieure SL. Les données mémorisées représentent les états successifs de HP décalés de 10 ns de l'un au suivant au cours d'une période de ce signal d'horloge de fréquence 10 MHz. Ces états sont transmis à un circuit transcodeur 32 qui les remplace par un mot binaire de quatre bits donnant le rang du signal d'horloge le plus proche de l'instant to. Dans l'exemple figure 3 ce signal est la sortie H3 donc de rang 3 ce qui se traduit par le code 0011 en sortie du transcodeur hexadécimal 32.

La logique 3 est complétée par un comparateur rapide 33 qui compare cette indication de rang avec celle qui existait au cours du balayage de ligne précédent et qui transmet à la logique de sélection 4 soit la même information de rang si elle est inchangée, soit la nouvelle indication de rang (diminuée ou augmentée d'une unité correspondant à un incrément de 10 ns) s'il y a eu variation au cours de la période TL de balayage ligne considérée. Par souci de simplification on n'a pas indiqué les synchronisations des circuits 32, 33 et 4 qui s'effectuent à la cadence du signal SL et en tenant compte des retards successifs apportés par ces différents circuits.

La période de suppression ligne TS est un multiple de la période d'horloge par exemple égale à 110 fois cette période et la sélection du signal HPC assure la remise en phase à l'instant T1 avec un décalage inférieur à un incrément de retard 10 ns considéré.

Le mode de calage par glissement de phase utilisé permet de fonctionner correctement dans des plages thermiques importantes et convient pour des normes militaires. La stabilité du calage et sa précision (de l'ordre du dixième de la période point dans l'exemple précité) permet de produire des incrustations de caractères et de symboles sans effet visuel sensible de décalages horizontaux.

La logique 4 de sélection permet de faire évoluer la phase du signal de sortie HPC par incrément de 10 ns pour la rendre identique à celle qui a été sélectionnée par ailleurs pour la synchronisation de ligne extérieure SL. Cette opération de remise en phase se réalise durant le temps de synchronisation TS, ou pour les décalages importants à la mise en route, durant la suppresion ligne. Dans tous les cas la mise en phase se réalise hors de la partie utile TV de la ligne vidéo, le décalage maximum étant de 10 ns dans l'exemple envisagé. Ce montage est utilisable dans tous les systèmes comportant différents ensembles générateurs vidéo destinés à être couplés entre eux et en particulier en présence de caméras solides ou de magnétoscopes.

En référence à la figure 5, il est représenté une utilisation d'un circuit 11 conforme à l'invention pour réaliser une incrustation de symbologie dans un système de visualisation vidéo comportant un générateur d'image vidéo de télévision 10 qui délivre la vidéo d'image VI. Un processeur graphique 12 qui comporte un générateur de symbole 13 reçoit l'horloge point calée HPc du générateur 11 et délivre la vidéo de symbole VS calée en phase temporelle au mélangeur d'incrustation 15. Le signal vidéo mélangé résultant V$_M$ est transmis à un dispositif de visualisation 17 annexe. Le générateur d'image 10 peut comporter plusieurs sources vidéo, par exemple deux caméras, et la vidéo VI peut résulter déjà d'un mélange de plusieurs signaux vidéo.

## Revendications

1. Circuit générateur de synchronisation point d'une image vidéo balayée ligne par ligne à une cadence de synchronisation ligne correspondant au standard de télévision utilisé, ledit circuit comprenant:
— une horloge à quartz (1) de fréquence correspondant à la fréquence point (FP) dudit standard;
— un circuit de retard (2) à grand N sorties pour retarder le signal horloge (HP) de 1 à N incréments de valeur 1/NFP) d'une sortie à la suivante ;
— un circuit logique de décodage et de commande (3) recevant les N signaux (H1 à HN) décalés et le signal de synchronisation ligne (SL) extérieur, déterminant et codifiant le rang (J) du premier signal d'horloge décalé qui suit le signal de synchronisation ;
— et un circuit logique de sélection (4) qui reçoit les N signaux d'horloge décalés et l'information de rang (J) codée pour sélectionner la sortie d'horloge (HJ) de rang correspondant.

2. Circuit selon la revendication 1, caractérisé en ce que le circuit logique de décodage et de commande (3) comporte une mémoire (31) pour mémoriser les états des N signaux d'horloge décalés (H1 à HN) à un instant de référence (to) de réception dudit signal de synchronisation ligne (SL), ladite mémoire étant suivie d'un circuit transcodeur (32) pour traduire en binaire ledit rang, et un circuit comparateur rapide (35) pour fournir l'information de rang au circuit logique de sélection (4) en le rectifiant s'il y a lieu après comparaison avec la valeur de rang utilisée au cours du balayage ligne précédent.

3. Utilisation d'un circuit selon la revendication 1 ou 2 pour réaliser une incrustation de symbologie dans un système comportant un générateur d'image vidéo de télévision (10) délivrant un signal vidéo d'image (VI) et ledit signal de synchronisation ligne (SL), ce dernier étant appliqué à un circuit générateur de synchronisation point (11) selon la revendication 1 ou 2 et qui pilote par sa sortie (HPc) un processeur graphique (12) comportant un générateur de symboles (13), la sortie vidéo de symbologie (VS) dudit processeur graphique étant mélangée avec la vidéo d'image dans un mélangeur d'incrustation (15) pour fournir le signal vidéo mélangé (VM) vers un dispositif de visualisation annexe (17).

## Claims

1. A synchronization point generator circuit for a video image scanned line by line at a line synchronization rate corresponding to the television standard utilized, said circuit comprising :
— a quartz clock (1) with a frequency corresponding to the point frequency (FP) of the said standard ;
— a delay circuit (2) having capital N outputs in order to delay the clock signal (HP) from 1 to N increments with a value 1/NFP) from one output to the next ;
— a logic decoding and control circuit (3) receiving the N offset signals (H1 through HN) and the external line synchronization signal (SL), determining and encoding the rank (J) of the first offset clock signal which follows the synchronization signal ;
— and a selection logic circuit (4) which receives the N offset clock signals and the encoded rank information (J) in order to select the clock output (HJ) with the corresponding rank.

2. The circuit as claimed in claim 1, characterized in that the control and decoding logic circuit (3) comprises a memory (31) in order to store the states of the N offset clock signals (H1 through HN) at a reference instant (t0) of reception of the said line synchronization signal (SL), the said memory being followed by a transcoding circuit (32) for the translation into the binary form of the said rank, and a high-speed comparison circuit (35) in order to provide rank information for the selection logic circuit (4) rectifying the same if necessary after comparison with the rank value utilized during the course of the preceding line scan.

3. The use of a circuit as claimed in claim 1 or in claim 2 in order to produce a symbology incrustation in a system comprising a television video image generator (10) delivering an image video signal (VI) and the said line synchronization signal (SL), the same being fed to a point synchronization generator circuit (11) as claimed in claim 1 or in claim 2 and which through its output (HPc) controls a graphics processor (12) comprising a symbol generator (13), the symbology video output (VS) of the said graphics processor being mixed with the video image in an incrustation mixer (15) in order to supply the mixed video signal (VM) to a connected viewing device (17).

## Patentansprüche

1. Generatorschaltung zur Punktsynchronisation eines Videobildes, das zeilenweise mit einem dem verwendeten Fernsehstandard entsprechenden Zeilensynchronisations-Takt abgetastet wird, wobei die Schaltung umfaßt :
— einen Quarz-Taktgeber (1) mit einer der Punktfrequenz (FP) des Standards entsprechenden Frequenz ;

— eine Verzögerungsschaltung (2) mit N Ausgängen, um das Taktsignal (HP) um 1 bis N Inkremente mit einem Wert von 1/NFP zwischen einem Ausgang und dem nächsten zu verzögern;

— eine Dekodierungs- und Steuerungs-Logikschaltung (3), die die N verzögerten Signale (H1 bis HN) und das externe Zeilen-Synchronisationssignal (SL) empfängt, den Rang (J) des ersten verzögerten Taktsignals, das dem Synchronisationssignal folgt, bestimmt und kodiert ;

— und eine Auswahl-Logikschaltung (4), die die N verzögerten Taktsignale und die kodierte Information des Rangs (J) empfängt, um den Taktgeberausgang (HJ) des entsprechenden Rangs auszuwählen.

2. Schaltung gemäß Anspruch 1, dadurch gekennzeichnet, daß die Dekodierungs- und Steuerungs-Logikschaltung (3) einen Speicher (31) aufweist, um die Zustände der N verzögerten Taktgebersignale (H1 bis HN) in einem Referenzzeitpunkt (t0) des Empfangs des Zeilen-Synchronisationssignals (SL) zu speichern, wobei dem Speicher eine Kodewandler-Schaltung (32) zum Übersetzen des genannten Rangs in Binärform und eine schnelle Komparatorschaltung (35) zum Liefern der Ranginformation an die Auswahl-Logikschaltung (4) folgt, wobei die schnelle Komparatorschaltung (35) die Ranginformation nach dem Vergleich mit dem Wert des während der vorhergehenden Zeilenabtastung verwendeten Rangs gegebenenfalls berichtigt.

3. Anwendung einer Schaltung gemäß Anspruch 1 oder 2 auf die Verwirklichung der Implementierung einer Zeichendarstellung in einem System, das einen Fernseh-Videobild-Generator (10) aufweist, der ein Videobild-Signal (VI) und das Zeilen-Synchronisationssignal (SL) liefert, wobei das letztere auf eine Punktsynchronisations-Generatorschaltung (11) gemäß dem Anspruch 1 oder 2 angewendet wird, die mit ihrer Ausgabe (HPc) einen einen Zeichengenerator (13) aufweisenden Grafikprozessor (12) steuert, dessen Zeichen-Videoausgabe (VS) in einer Implementierungs-Mischerschaltung (15) zu dem Videobild addiert wird, um das gemischte Videosignal (VM) an ein Anzeige-Endgerät (17) zu liefern.

FIG.1

FIG.2

# FIG.3

Horloge — $H_0 (H_N)$ — 100 ns

$1^{er}$ retard — 10 ns — $H_1$

$2^e$ retard — 20 ns — $H_2$

$3^e$ retard — 30 ns — $H_3$

$4^e$ retard — $H_4$

$9^e$ retard — $H_9$

S. EXT — SL

| Valeurs mémorisées | 1 | 1 | 1 | 0 | 0 | 0 | 0 | 0 | 1 | 1 |
|---|---|---|---|---|---|---|---|---|---|---|
| | $H_0$ | $H_1$ | $H_2$ | $H_3$ | $H_4$ | $H_5$ | $H_6$ | $H_7$ | $H_8$ | $H_9$ |

# FIG.4

HORLOGE QUARTZ — *1*

HP

LIGNE A RETARD — *2*

1 — 10

$H_0$  $H_1$  $H_{10}$

MEMOIRE — *31*  SL

TRANSCODEUR — *32*

COMPARATEUR RAPIDE — *33*

LOGIQUE DE SELECTION — *4*

$HP_c$

# FIG.5

GENERATEUR IMAGE VIDEO. TV — *10*

$V_I$

MELANGEUR INCRUSTATION VIDEO — *15*

$V_M$

MONITEUR — *17*

SL

GENERATEUR SYNCHRO. POINT — *11*

$HP_c$

GENERATEUR SYMBOLES — *13*

*12*

$V_S$

PROCESSEUR GRAPHIQUE